# EUROPEAN PATENT APPLICATION

(11) **EP 0 892 193 A1**
(43) Date of publication of application: **20.01.1999**
(21) Application number: 97830349.3
(22) Date of filing: 14.07.1997
(51) Int. Cl.: F16H 7/08, F16H 7/18

(54) **A device for take-up of tolerance in a chain drive**

(71) Applicant: Morse Tec Europe S.p.A., 20121 Milano (IT)
(72) Inventor: Capucci, Germinal Flavio, 20040 Carnate (MI) (IT)
(74) Representative: Zavattoni Gusmeroli, Maria Chiara

(57) **Abstract**

In a chain drive, initial calibration or adjustment for take-up or compensation of the manufacturing and assembly tolerances is achieved by an adjustment device that comprises a fixed block (12) and a spring-loaded moveable pad or snubber (14), which, after initial positioning for take-up of tolerances, is fixed in position on the body.

The adjustment device (10) can generally be positioned on the tight portion of the chain and can be an independent device or it can be combined with a traditional hydraulic or mechanical tensioner for taking up slack due to wear.

## Description

In a chain drive system a device is generally provided for taking-up or compensating slack on a loose side of the chain. The slack take-up device, or tensioner, largely comprises two categories: a hydraulic tensioner made up of a hydraulic cylinder piston assembly which carries on its moveable member a shoe or pad ("snubber") designed to mate with the chain and pushed against the chain by means of hydraulic pressure; a mechanical tensioner which, on the other hand, exploits the action of a helical or leaf spring depending upon the type. This device takes up both the slack due to the wear of the chain and the sprockets, and the slack or the tolerances due to any initial errors in assembly. As a result, however, the moveable member of the tensioner, in order to have a desired take-up, must have a considerable excursion. Another result is that sometimes an initial adjustment, or a take-up of initial assembly tolerances, when they are significant, jeopardizes the possibility of compensating wear later on, in that the traverse of the moveable member is largely or completely exploited for initial adjustment to tolerances.

Furthermore, the known systems generally have a fixed chain guide on the tight strand of the chain.

There is therefore the need in the field to obtain a satisfactory take-up of slack, whether due to assembly or manufacturing errors inherent in the system, or to the wear between the parts that occurs with time

This need is satisfied with a device as stated in claim 1 and a system as stated in claim 8.

The new device comprises a fixed body or block and a shoe or pad ("snubber") that is adjustable in position thereon. The block is fixed at a position near a tight portion of the drive chain, and the snubber is pushed into a extended condition by the action of springs and can be locked in position by means of screws. A locking means is preferably provided to lock the shoe with the block in a retracted condition thereof, for transportation and storage.

The system comprises such a pad on one or more tight side/s of the drive chain together with a hydraulic or mechanical tensioner on a loose side of the chain. In a preferred embodiment, a tolerance compensation device and a hydraulic tensioner are mounted on a single block.

The new device and system, relying on different means for initial compensation of assembly tolerances ad take-up of slack due to wear, respectively, allows to have a chain drive that is always tight for a greater length of time than traditional systems.

An unrestrictive exemplary embodiment of the invention will be described below with reference to the attached drawings, in which:
- Figure 1 shows a part sectional side view, of an adjustment device according to the invention, with a chain of a drive chain, shown in a broken-away view; the chain is shown wound onto two sprockets drawn with a dashed line; the view is drawn from below with respect to Figure 2; the device is shown locked in a retracted or resting condition;
- Figure 2 is a enlarged sectional view taken along plane 2-2 in Figure 1;
- Figure 3 is a sectional view taken along plane 3-3 in Figure 1, enlarged with respect to said figure;
- Figure 4 is a sectional view taken along the plane marked 4-4 in Figure 1, enlarged with respect to said figure;
- Figure 5 is a similar view to Figure 1, but shows the device of the invention in an extended working position;
- Figure 6 is a sectional view taken along plane 6-6 in Figure 5,
- Figure 7 is a sectional view taken along plane 7-7 in Figure 5;
- Figure 8 is a perspective view of the adjustment device;
- Figure 9 is a perspective view showing a modified embodiment of the adjustment device combined with a per se known hydraulic tensioner, for compensating or taking up slack due to wear.

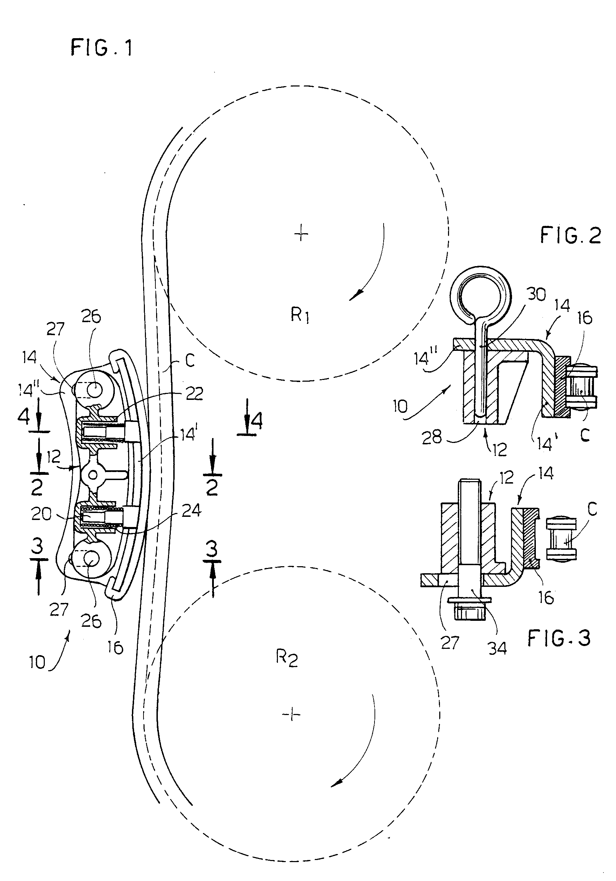

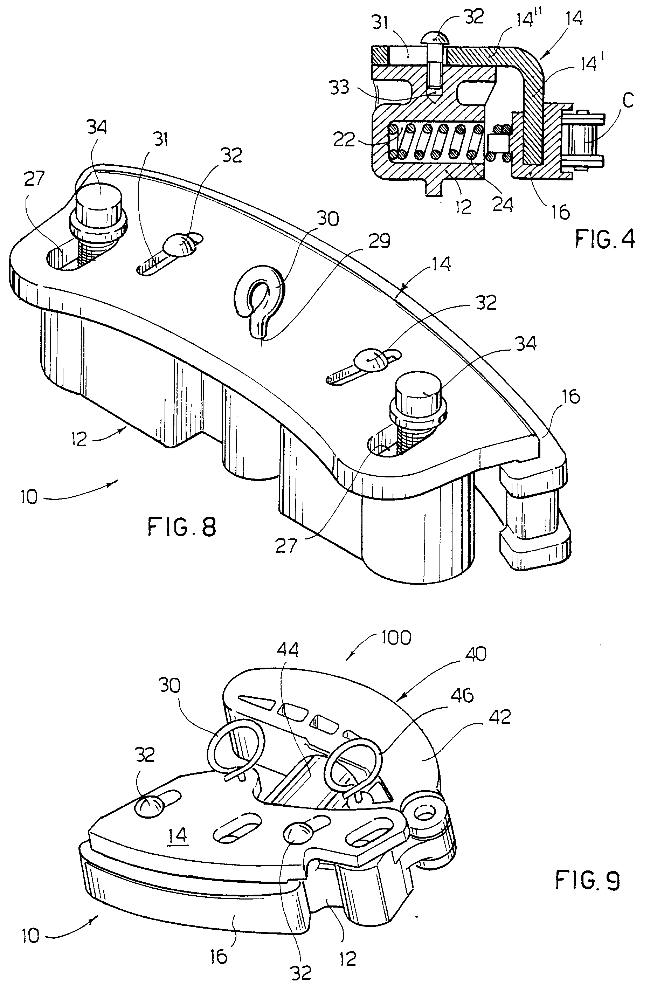

An adjustment device 10 according to this invention comprises a fixed portion or block 12 and a moveable portion or pad or snubber 14. The moveable snubber 14 is L-shaped in sectional view and carries a bad or strip of anti-friction material on a leg 14' of the L. The portion 14' is integral with two guide stems 20, 20. The block 12 has two housings 22 with parallel axes to receive said stems 20, with the interposition of pressure springs 24. The block 12 also has smooth holes 26 to accommodate screws for fixing to a base, said holes having an axis at right angles to the housings 22, and has a seat or hole 28 for a retaining pin 30. The leg 14'' of the snubber is made with elongated slots 27, coinciding with the holes 26, and with a through hole 29, coinciding with the hole 28. The axes of the slots 27 are substantially parallel to the axes of the housings 22. Further elongated slots 31 in the portion 14'' of the snubber have their axes parallel to the axes of the slots 27 and are positioned to coincide with the holes 33 in the body. "Self-threading" rivets or nails 32 (i.e. provided with retaining projections on the stem) are inserted with the stem engaged in the holes 33. For storage and transportation, the moveable portion is retained in the retracted position (Figs. 1, 2, 3, 4) with the stems inside the housings 22 against the action of the springs 24, and this position is fixed by means of a retaining pin 30, inserted in the holes 28 and 29. In this condition the rivets 32 are engaged in the holes 33 so that there is some play between a head of the rivet and the surface of the snubber.

The adjustment device is installed, as will be described below, on a tight side of a drive chain C between two sprockets R₁ and R₂.

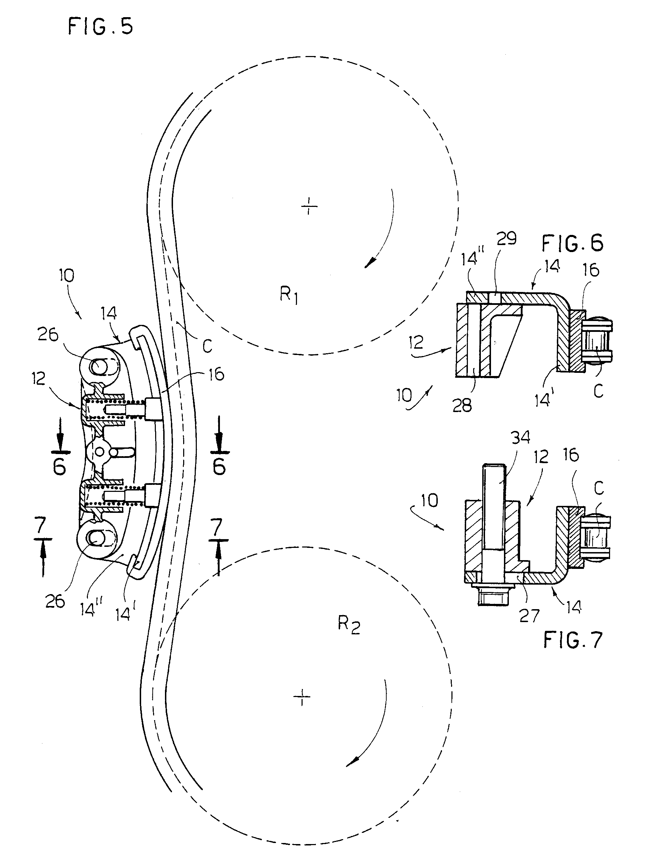

Once the fixed block 12 has been fixed in position by screwing anchoring screws 34 into it through the holes 26, the stop 30 is pulled out. The springs 24 come into operation to press the snubber 14 against the chain C taking-up the slack due to constructional tolerances. The snubber 14 undergoes a sliding movement on the block, the extent of which varies according to the slack to be taken up. The extended condition is shown in Figure 5. The block 12 and the snubber 14 are then fixed in their reciprocal positions by applying screws 34 and inserting them until they lock.

This adjustment operation is generally done only on start-up of the system, after which the device 10 behaves like any other fixed shoe or "snubber" of the prior art.

As variants, screws can be used instead of the rivets 32, and the holes 33 can be threaded.

With reference to Figure 9, a modified embodiment of the invention will now be described, in which an assembly 100 comprising an adjustment device and a tensioner for take up of the wear combined with each other, for the same chain drive. The adjustment device 10a comprises the same parts described above with reference to the preceding figures, and therefore will not be described in detail. In particular the block 12, on which the snubber 14 with the anti-friction strip 16 can slide for a limited stroke, is shown. The snubber is shown in the retracted condition, retained by the ring stop 30. A hydraulic tightener 40, for recovery of the slack due to wear in the system, comprises in a conventional manner a snubber 42 and a thrust cylinder-piston 44. The device will not be described in ether detail in that it is per se known. It also is illustrated in the retracted condition for transportation and storage, retained by a ring stop 46.

## Claims

1. An adjustment device for take-up of initial manufacturing and assembly tolerances of a chain drive system characterized in that it comprises:
- a block (12);
- a pad or snubber (14) on the block and slidable thereon for a length between a retracted condition and an extended condition and carrying engaging means for the chain;
- spring means (24) between said block and pad to urge the pad in said extended condition.

2. A device according to the preceding claim, characterized in that it comprises locking means (28, 29, 30) to retain said pad in the retracted condition on said block.

3. A device according to claim 1, characterized in that it further comprises fixing means (31, 33, 32) to fix said pad on said block in the extended condition.

4. A device according to claim 2, characterized in that said locking means comprise a stop (30), a hole (28) in the block and a hole (29) in the pad, which are aligned when the pad is in the retracted condition on the block.

5. A device according to claim 3 characterized in that said fixing means comprise a hole (33) in the block, an elongated slot (31) in the pad and a rivet or screw that can be locked in the hole (33) and with the head protruding from the slot.

6. A device according to claim 1, characterized in that it comprises a through hole (26) in the block, a slot (27) in the pad, and anchoring screws (34) for fixing to a base, said screws having a stem whose diameter does not exceed the diameter of the hole in the block.

7. A device according to claim 1, characterized in that it comprises guide stems (20) integral with the pad, cooperating with seats (20) in the block ( C).

8. A chain drive system in which a drive chain cooperates with sprockets (R₁ and R₂) and comprises a slack portion of the chain and one or more tight portions thereof, characterized in that it comprises an adjustment device (10) for adjustment by taking up the assembly tolerances on the tight portion of the chain, in addition to a tensioner device (40) to take up slack due to wear on one or more portions of the chain.

9. A system according to claim 8, characterized in that the adjustment device (10) for take-up of tolerances is linked with the tensioner (40) for take up of slack due to wear.
